# FASCICULE DE BREVET EUROPEEN

(11) **EP 0 994 668 B1**
(45) Date de publication et mention de la délivrance du brevet: **02.07.2003**
(21) Numéro de dépôt: 99919313.9
(22) Date de dépôt: 06.05.1999
(51) Int. Cl.: A47L 5/12, A47L 5/22

(54) **DISPOSITIF D'ASPIRATION**
SAUGVORRICHTUNG
SUCTION DEVICE

(30) Priorité: 07.05.1998 FR 9806050
(43) Date de publication de la demande: 26.04.2000
(73) Titulaire: SEB S.A., 69130 Ecully (FR)
(72) Inventeur: FLEURIER, Vincent, F-27200 Vernon (FR); DANCER, Paul, F-42100 Saint Etienne (FR)
(74) Mandataire: Kiehl, Hubert
(86) Numéro de dépôt international: FR9901077
(87) Numéro de publication internationale: WO99056606

(56) Documents cités:
- EP-A- 0 431 178
- FR-A- 1 556 111
- FR-A- 2 051 818
- US-A- 5 394 041

## Description

### DOMAINE TECHNIQUE

La présente invention est relative à un dispositif d'aspiration comprenant un carter muni d'au moins une ouverture d'aspiration et d'au moins une ouverture de refoulement, renfermant un moteur électrique dont le rotor est associé à des moyens pour créer un écoulement d'air de l'ouverture d'aspiration à l'ouverture de refoulement.

### TECHNIQUE ANTERIEURE

On a déjà proposé dans le FR-1 556 111 un dispositif d'aspiration de ce genre dans lequel le rotor du moteur est traversé par un arbre de pivotement monté dans deux paliers situés de part et d'autre de ce rotor, le stator étant situé de chaque côté du plan du rotor. Des ailettes radiales de ventilateur, solidaires du rotor, partent de la périphérie de celui-ci et s'étendent dans un carter entre des ouvertures d'entrée et de sortie de l'écoulement d'air formé par le ventilateur. L'air expulsé radialement par rapport au ventilateur, poursuit sa course dans un conduit de plus en plus évasé afin de diminuer la vitesse de sortie de l'air. Les ouvertures d'entrée communiquent avec un suceur formé par une fente annulaire ménagée entre deux organes circulaires concentriques fixés l'un à l'autre. L'organe circulaire interne présentant la forme d'une cuvette destinée à recevoir les particules qui ont été empêchées de passer à travers les ouvertures d'entrée qui sont protégées par un filtre.

La solution proposée par ce document consiste à former un aspirateur compact susceptible d'être logé dans le carter d'un suceur que l'on peut fixer à un manche, à l'instar d'un balai et qui est capable de passer sous les meubles. Dans la solution proposée par ce document, la dépression créée par le ventilateur est pratiquement négligeable; or c'est grâce à la dépression appliquée sur la surface à nettoyer qu'un aspirateur est capable de décoller les poussières et autres corps plus ou moins gros de ces surfaces. Ceci est particulièrement important sur des tapis ou de la moquette, surfaces sur lesquelles un simple ventilateur ne permet pas un nettoyage efficace.

On a proposé dans le US 5 394 041 un moteur à commutation électronique pour aspirateur dans lequel l'arbre du rotor du moteur est solidaire d'une turbine ainsi que d'un ventilateur pour le refroidissement du moteur. Des aimants permanents sont fixés sur l'axe du rotor qui, par l'intermédiaire d'un capteur à effet Hall, permettent de contrôler et d'asservir la vitesse du moteur. Contrairement au document précédent, celui-ci ne vise pas à réduire l'encombrement pour permettre de loger le moteur dans le carter du suceur, mais son objectif est d'obtenir un bon refroidissement du moteur et des paliers de roulement.

Le FR 2 051 818 se rapporte à un groupe moto-ventilateur pour aspirateur de poussière de type " turbine ", apte à créer une forte dépression, dans lequel un disque de ventilateur est fixé au moyen d'écrous sur l'arbre central du moteur Ce disque comporte un jeu d'aubes radiales sur chacune de ses faces, les deux jeux d'aubes étant disposés en quinconce l'un par rapport à l'autre. Le carter délimitant la volute de pompage est de forme torique et est réalisé en matière plastique moulée. L'écoulement de l'air s'effectue selon une spirale divergente pour diminuer la violence du courant d'air.

Il ressort de ces documents que le seul d'entre eux qui a pour objectif la compacité et est destiné en particulier à permettre le montage d'un ensemble moteur aspirateur dans un suceur est le FR 1 556 111 susmentionné. Toutefois, comme on a pu s'en rendre compte, cette solution ne permet pas d'associer une turbine au moteur, mais un simple ventilateur qui n'est pas à même de générer une dépression importante, nécessaire pour produire une aspiration efficace. Aucune solution à la fois compacte et capable de créer une dépression apte à produire une aspiration efficace n'a donc été proposée jusqu'ici.

### EXPOSE DE L'INVENTION

Le but de la présente invention est précisément d'apporter une solution permettant de résoudre ce problème par des moyens simples susceptibles de réduire le nombre de pièces et donc de réduire les coûts de fabrication et de simplifier les opérations de montage.

A cet effet, la présente invention a pour objet un dispositif d'aspiration du type susmentionné qui comporte une cuvette dont la face interne du fond porte un arbre de pivotement coaxial à son axe de révolution, monté dans un palier situé au centre du stator et dont la face externe porte des aubes de turbine en spirales s'étendant entre les ouvertures d'aspiration et de refoulement dudit carter, le bord de ladite cuvette entourant le stator du moteur et portant une pluralité d'aimants permanents à aimantation radiale répartis angulairement formant le rotor du moteur.

Cette disposition permet, grâce à la cuvette qui porte à la fois les aimants permanents formant le rotor du moteur, dans laquelle le stator est logé et portant les aubes de turbine sur sa face externe, de réduire au maximum l'encombrement en hauteur du dispositif.

De préférence, les canaux délimités par les aubes en spirales et le carter ont des sections au plus constantes ou même préférablement décroissantes entre lesdites ouvertures d'aspiration et de refoulement.

Le fluide soumis à la force centrifuge est ainsi accéléré entre les ouvertures d'aspiration et de refoulement créant de ce fait une dépression en amont, c'est-à-dire au niveau de l'ouverture d'aspiration.

Avantageusement, la cuvette, son arbre de pivotement et les aubes constituent une seule pièce moulée, dans laquelle lesdits aimants permanents sont partiellement noyés.

Ainsi, l'organe mobile du moteur et celui de la turbine constituent une seule et même pièce moulée, réduisant considérablement le coût de fabrication et permettant de travailler avec des tolérances étroites.

De préférence, le carter est monté de façon étanche dans un collecteur dans lequel débouchent la pluralité d'ouvertures de refoulement réparties angulairement, ce collecteur étant relié à un récupérateur de poussière par l'intermédiaire d'un conduit et d'au moins un élément de séparation des phases solide et gazeuse.

Dans une forme préférée de l'invention, le carter et le collecteur constituent le boîtier d'un suceur dont l'ouverture d'aspiration constitue l'ouverture du suceur.

Compte tenu de la compacité de l'ensemble moteur turbine, le carter et le collecteur qui le renferment peuvent directement constituer le suceur. Ainsi, à part le sac à poussière, tous les organes de l'aspirateur sont incorporés dans le suceur permettant de rendre l'aspirateur presque aussi maniable qu'un simple balai. L'essentiel du poids de l'appareil se situe dans le suceur que l'on déplace en le faisant glisser sur la surface à nettoyer, de sorte que l'utilisateur n'a pas à en porter le poids pendant l'utilisation de l'appareil. En effet, contrairement aux aspirateurs balais connus de l'art antérieur où le moteur et la turbine sont logés dans un carter placé le long d'un manche constitué par un tube reliant la turbine au suceur, avec l'aspirateur selon l'invention, le poids est abaissé jusque sur le sol qui le supporte entièrement. Compte tenu de l'inclinaison du manche lors de l'utilisation, une partie du poids de l'ensemble moto-ventilateur d'un aspirateur balai classique doit être supporté par l'utilisateur.

Avantageusement, les aimants permanents du rotor sont disposés autour du stator et sont à aimantation radiale, le moteur ne comportant ni rupteur ni commutateur actionné par le rotor.

Cette disposition permet d'avoir les aimants permanents et le stator dans un même plan permettant de réduire l'encombrement en hauteur au maximum et conduisant à un suceur suffisamment mince pour passer sous les meubles.

De préférence, le moteur est à commutation électronique.

Un tel moteur permet de supprimer les balais de commutation et de rendre le moteur plus compact, réduisant ainsi le volume et en particulier, la hauteur du carter.

### DESCRIPTION SOMMAIRE DES DESSINS

L'invention sera mieux comprise à l'étude d'une forme d'exécution du dispositif d'aspiration objet de la présente invention, décrite ci-après, à titre nullement limitatif et illustrée schématiquement dans les figures annexées dans lesquelles:
- la figure 1 est une vue en coupe diamétrale de cette forme d'exécution,

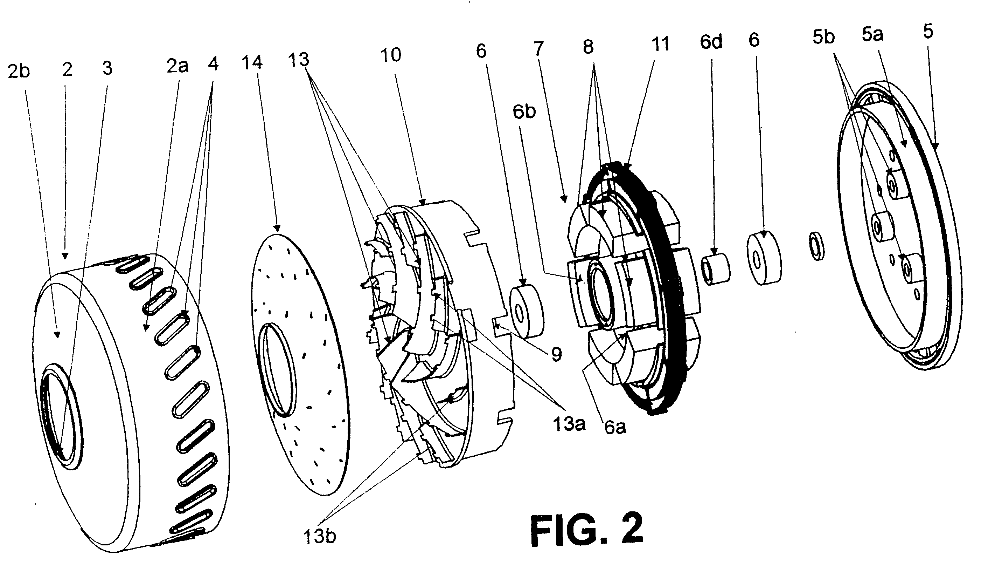

- la figure 2 est une vue éclatée de la figure 1,
- la figure 3 est une vue d'ensemble d'un aspirateur utilisant le dispositif d'aspiration objet de l'invention.

### MEILLEURE MANIERE DE REALISER L'INVENTION

Le dispositif d'aspiration illustré comporte un carter comprenant d'une part, une cuvette circulaire 2 à paroi périphérique cylindrique 2a, présentant une ouverture d'aspiration centrale 3 traversant le fond 2b de la cuvette 2 et une pluralité d'ouvertures de refoulement 4 réparties angulairement tout autour de la paroi périphérique 2a de la cuvette 2 et, d'autre part, un couvercle 5 fixé au bord de la paroi périphérique 2a de la cuvette circulaire 2 et fermant le carter.

Le couvercle 5 comporte sur sa face interne des parties en relief, comprenant un rebord annulaire 5a et trois plots de fixation 5b. Un support de stator 6b, solidaire d'une bague 6a constituant la bague externe d'un roulement à billes 6 et d'une broche de positionnement angulaire 6c des tôles 7a du stator 7 est vissé sur ces plots de fixation 5b. Les tôles d'acier doux 7a du stator 7 sont découpées en étoile pour former, dans cet exemple, six bras radiaux autour de l'ouverture axiale qui sert à les empiler autour de la bague externe 6a du roulement à billes 6, la broche 6c servant à les positionner angulairement. Les tôles d'acier doux 7a formant le stator 7 et le support de stator 6b sont maintenus dans une enveloppe 7c de matière plastique injectée. Des bobines de cuivre 8 sont enroulées autour des parties d'enveloppe 7c entourant chacun des bras du stator 7.

La bague interne 6d du roulement à billes 6 est solidaire d'un arbre de pivotement 9 qui est coaxial et fait saillie de la face interne du fond d'une cuvette rotative 10, montée ainsi de manière rotative par rapport au stator 7. Le bord de cette cuvette rotative 10 porte des aimants permanents 11 à aimantation radiale. Ces aimants permanents 11 sont rendus solidaires du bord de la cuvette rotative 10 lors de l'injection de celle-ci réalisée en une pièce de matière plastique avec son arbre de pivotement 9. On peut aussi avoir recours à d'autres matières de faible masse volumique afin de réduire au maximum les contraintes d'équilibrage. On peut ainsi songer à certains alliages à base d'aluminium ou de magnésium. La résistance mécanique de ces matières devra être suffisante pour supporter les contraintes mécaniques auxquelles va être soumise cette cuvette rotative 10. Les aimants permanents 11 se situent juste au même niveau que les bras du stator 7, et sont séparés de ces bras par un entrefer. Le bord de la cuvette rotative 10 a le même diamètre que le rebord annulaire 5a du couvercle 5, un jeu de sécurité de l'ordre de 1mm les séparant.

En ce qui concerne les aimants permanents 11, il peut s'agir de plastoaimants surmoulés ou non avec la cuvette rotative 10 ou d'aimants frittés. Dans le cas où la cuvette est réalisée en un matériau amagnétique, il faut naturellement prévoir d'intercaler entre les aimants 11 et la cuvette rotative 10 un anneau en matériau magnétique pour permettre aux lignes de flux magnétique de se refermer convenablement. Cet anneau peut être éventuellement surmoulé directement sur le bord de la cuvette rotative 10. Les aimants permanents sont préférablement aimantés de façon sensiblement radiale.

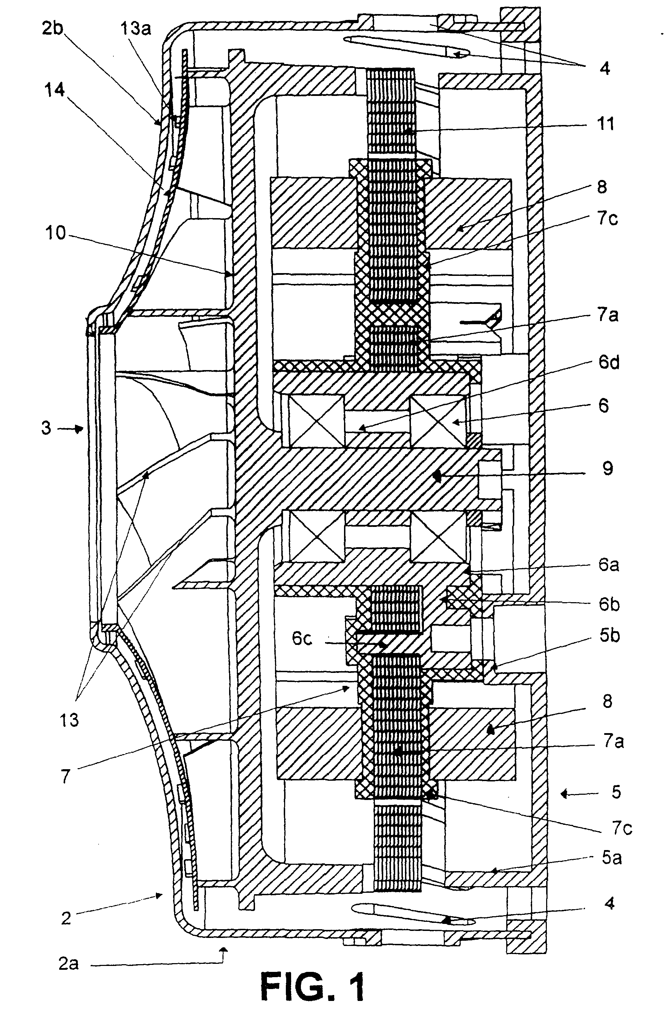

Des aubes en spirale 13 font saillie sur la face externe du fond de la cuvette rotative 10. Le bord libre de chacune de ces aubes en spirale 13 épouse le profil d'une paroi 14 conique convexe, sensiblement parallèle au fond 2b de la cuvette 2 du carter qui n'est donc également pas plat. En effet, comme mieux visible sur la figure 1, la distance entre l'ouverture d'aspiration 3 traversant le centre du fond 2b de la cuvette 2 et le couvercle 5, est plus grande que la distance entre la périphérie de ce fond 2b et le couvercle 5. La surface annulaire conique globalement convexe reliant l'ouverture d'aspiration 3 à l'angle périphérique séparant le fond 2b et la paroi 2a de la cuvette est toutefois légèrement incurvée vers l'intérieur, c'est à dire, quelque peu concave lorsque vue de l'extérieur du carter. De préférence, la paroi 14 adjacente aux bords libres des aubes en spirale 13 est fixée à ces dernières par collage, par soudage, aux ultrasons par exemple, ou encore par rivetage à l'aide de petit picots 13a formés sur le bord des aubes en spirale 13.

Grâce à ce profil de la paroi 14, la hauteur des canaux en spirale formés entre l'ouverture d'aspiration 3 et la périphérie de la cuvette rotative 10 par les aubes en spirale 13 diminue en allant du centre à la périphérie. Etant donné que leur largeur augmente, des aubes 13b, plus courtes que les aubes 13, divisent la largeur du canal en deux dans sa partie périphérique la plus large, de sorte que la section de ces canaux diminue. Par conséquent, l'air soumis à la force centrifuge par la rotation de la cuvette 10 portant les aubes en spirale 13 est soumis à une accélération entre l'entrée et la sortie des canaux en spirale de la turbine formée sur la face externe du fond de la cuvette rotative 10, engendrant une dépression au niveau de l'ouverture d'aspiration 3 qui permet d'exercer une force sur les poussières à enlever de la surface à nettoyer.

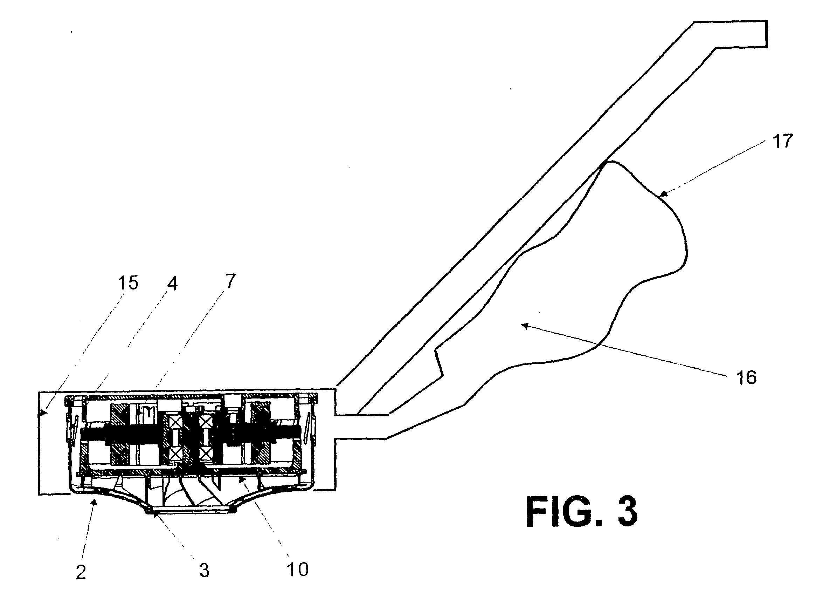

Compte tenu de la compacité du dispositif d'aspiration décrit ci-dessus, celui-ci peut directement constituer la majeure partie du suceur d'un aspirateur, de sorte que toutes les parties actives de l'aspirateur sont de ce fait réunies dans le suceur lui-même. La figure 3 illustre précisément une forme d'exécution préférée où le carter 2, 5 constitue directement la face inférieure du suceur d'un aspirateur. A cet effet, les ouvertures de refoulement 4, ménagées à travers le bord 2a de la cuvette 2, débouchent dans une enceinte 15 dans laquelle le carter 2, 5 est fixé de façon étanche. Cette enceinte 15, constituant la paroi latérale et supérieure du suceur, sert à recevoir l'air chargé de la poussière aspirée sortant par les ouvertures de refoulement 4 et à le conduire dans un récupérateur de poussière 16 communiquant avec l'extérieur à travers au moins un filtre 17 destiné à séparer les phases solides de la phase gazeuse rejetée vers l'atmosphère.

Si, dans cette forme d'exécution le récupérateur de poussière est situé à distance du dispositif d'aspiration, c'est pour ne pas augmenter le volume de ce dispositif et parce que le récupérateur de poussière doit de préférence avoir un volume suffisant pour ne pas nécessiter des changements trop fréquents. De toute façon, ce récupérateur ne représente pas un poids important et l'essentiel du poids est dans le carter 2, 5 qui repose directement sur la surface à nettoyer.

A titre d'exemple, avec la forme d'exécution décrite ici, le carter peut avoir une hauteur inférieur à 6 cm et un diamètre de 12,5 cm. De telles dimensions permettent donc d'utiliser le carter directement comme suceur apte à passer sous les meubles. Cette réduction de volume qui permet de créer un nouveau type d'aspirateur, conduit à un système comportant un minimum de pièces, dans lequel, en particulier le rotor du moteur et la partie mobile de la turbine sont formés par une seule pièce, de préférence en matière plastique injectée.

Grâce à ce nouveau concept qui ne sacrifie pas à l'efficacité de la force d'aspiration, le nombre de pièces est réduit et par conséquent, le coût lié à la fabrication et au montage est substantiellement réduit. La disposition des aimants permanents 11 à aimantation radiale en face des bras formés par les tôles empilées du stator 7 permet un gain appréciable sur la hauteur de l'ensemble moteur-turbine. La réduction du nombre de pièces permet aussi de diminuer sensiblement le poids de l'ensemble. Le concept du rotor/turbine formé par la cuvette simplifie également la phase d'équilibrage, du fait qu'il n'y a qu'une seule pièce rotative. Par conséquent, le dispositif objet de l'invention permet de réduire les coûts de fabrication.

Avantageusement, pour des questions de sécurité, la cuvette 2 et le couvercle 5 sont collés l'un à l'autre de sorte que l'utilisateur ne peut pas accéder aux parties électriques aussi bien qu'aux parties mécaniques présentant un danger pour lui. Etant donné que l'ensemble moteur-turbine que contient le carter ne nécessite aucun entretien, il n'y a pas d'inconvénient à ce qu'on ne puisse pas ouvrir ce carter.

A titre indicatif, le moteur du dispositif selon l'invention est un moteur à trois phases qui peut typiquement délivrer une puissance mécanique de 600W tournant à 40'000 tr/min.

Comme on peut s'en rendre compte, la cuvette rotative 10 et le rebord annulaire périphérique 5b isolent pratiquement le moteur de la circulation d'air chargé de poussière, de sorte qu'il n'y a pas de risque que la poussière s'introduise dans le moteur.

### POSSIBILITE D'APPLICATION INDUSTRIELLE

L'invention trouve son application dans le domaine technique des aspirateurs et des dispositifs destinés au nettoyage.

## Revendications

1. Dispositif d'aspiration comprenant un carter (2, 5) muni d'au moins une ouverture d'aspiration (3) et d'au moins une ouverture de refoulement (4), renfermant un moteur électrique dont le rotor (10, 11) est associé à des moyens (13) pour créer un écoulement d'air de l'ouverture d'aspiration (3) à l'ouverture de refoulement (4), **caractérisé en ce qu'**il comporte une cuvette (10) dont la face interne du fond porte un arbre de pivotement (9) coaxial à son axe de révolution, monté dans un palier (6) situé au centre du stator (7) et dont la face externe porte des aubes de turbine en spirales (13) s'étendant entre les ouvertures d'aspiration (3) et de refoulement (4) dudit carter (2, 5), le bord de ladite cuvette (10) entourant le stator (7) du moteur et portant une pluralité d'aimants permanents (11) à aimantation radiale répartis angulairement, formant le rotor du moteur.

2. Dispositif d'aspiration selon la revendication 1, **caractérisé en ce que** les canaux délimités par les aubes en spirales (13) et le carter (2, 5) ont des sections au plus constantes ou même préférentiellement décroissantes entre lesdites ouvertures d'aspiration (3) et de refoulement (4).

3. Dispositif d'aspiration selon l'une des revendications précédentes, **caractérisé en ce que** ladite cuvette (10), son arbre de pivotement (9) et lesdites aubes (13) constituent une seule pièce moulée, dans laquelle lesdits aimants permanents (11) sont partiellement noyés.

4. Dispositif selon la revendication 3, **caractérisé en ce que** ladite pièce moulée comprenant l'arbre de pivotement (9), la cuvette (10) et les aubes (13) est en matière plastique injectée.

5. Dispositif d'aspiration selon l'une des revendications précédentes, **caractérisé en ce que** ledit carter (2, 5) est monté de façon étanche dans un collecteur (15) dans lequel débouchent une pluralité d'ouvertures de refoulement (4) réparties angulairement, ce collecteur (15) étant relié à un récupérateur de poussière (16) par l'intermédiaire d'un conduit et d'au moins un élément de séparation (17) des phases solides et gazeuses.

6. Dispositif d'aspiration selon la revendication 5, **caractérisé en ce que** ledit carter (2, 5) et le collecteur (15) constituent le boîtier d'un suceur dont l'ouverture d'aspiration (3) constitue l'ouverture du suceur.

7. Dispositif selon l'une des revendications précédentes, **caractérisé en ce que** lesdits aimants permanents (11) sont disposés autour dudit stator (7) et sont à aimantation radiale, le moteur ne comportant ni rupteur ni commutateur actionné par le rotor.

8. Dispositif selon l'une des revendications précédentes, **caractérisé en ce que** le moteur est un moteur à commutation électronique.

## Claims

1. A vacuum cleaning device comprising a casing (2, 5) provided with at least one suction opening (3) and at least one delivery opening (4), said casing containing an electric motor having a rotor (10, 11) that is associated with means (13) for creating a flow of air from the suction opening (3) to the delivery opening (4), said device being **characterized in that** it comprises a dish (10) having a bottom with an inside face that carries a pivot shaft (9) on its axis of revolution, mounted in a bearing (6) situated at the center of the stator (7), and with an outside face that carries spiral turbine blades (13) extending between the suction and delivery openings (3, 4) of said casing (2, 5), the edge of said dish (10) surrounding the stator (7) of the motor and carrying a plurality of permanent magnets (11) having angularly distributed radial magnetization, forming the rotor of the motor.

2. A vacuum cleaning device according to claim 1, **characterized in that** the channels defined by the spiral blades (13) and the casing (2, 5) have sections that are, at the most, constant, and preferably decrease, between said suction and delivery openings (3, 4).

3. A vacuum cleaning device according to any preceding claim, **characterized in that** said dish (10), its pivot shaft (9), and said blades (13) constitute a single molded part in which said permanent magnets (11) are partially embedded.

4. A device according to claim 3, **characterized in that** said molded part comprising the pivot shaft (9), the dish (10), and the blades (13) is made of injection molded plastics material.

5. A vacuum cleaning device according to any preceding claim, **characterized in that** said casing (2, 5) is mounted in sealed manner in a manifold (15) into which a plurality of angularly distributed delivery openings (4) open out, the manifold (15) being connected to a dust collector (16) by means of a duct and via at least one separator element (17) for separating solid and gas phases.

6. A vacuum cleaning device according to claim 5, **characterized in that** said casing (2, 5) and the manifold (15) constitute the housing of a suction head having a suction opening (3) that constitutes the opening of the suction head.

7. A device according to any preceding claim, **characterized in that** said permanent magnets (11) are disposed around said stator (7) and have radial magnetization, the motor including neither a switch nor a commutator actuated by the rotor.

8. A device according to any preceding claim, **characterized in that** the motor is electronically commutated.

## Patentansprüche

1. Ansaugvorrichtung mit einem Kasten (2, 5), der mit wenigstens einer Ansaugöffnung (3) und wenigstens einer Auslaßöffnung (4) ausgestattet ist und einen Elektromotor umschließt, dessen Rotor (10, 11) Mitteln (13) zum Erzeugen eines Luftstroms von der Ansaugöffnung (3) zu der Verdrängungsöffnung (4) zugeordnet ist, **dadurch gekennzeichnet, daß** sie eine Schale (10) aufweist, deren Innenseite des Bodens eine Lagerwelle (9) koaxial zu ihrer Rotationsachse trägt, die in einem im Zentrum des Stators (7) liegenden Lager (6) angebracht ist und deren Außenseite spiralförmige Turbinenschaufeln (13) trägt, die sich zwischen den Ansaugöffnungen (3) und den Auslassöffnungen (4) des Kastens (2, 5) erstrecken, wobei der Rand der Schale (10) den Stator (7) des Motors umgibt und mehrere Permanentmagneten (10) mit radialer Magnetisierung trägt, die im Winkel verteilt sind und den Rotor des Motors bilden.

2. Ansaugvorrichtung nach Anspruch 1, **dadurch gekennzeichnet, daß** die Kanäle, die von den spiralförmigen Schaufeln (13) und dem Kasten (2, 5) begrenzt sind, höchstens konstante oder sogar bevorzugt abnehmende Querschnitte zwischen den Ansaugöffnungen (3) und den Auslassöffnungen (4) haben.

3. Ansaugvorrichtung nach einem der vorhergehenden Ansprüche, **dadurch gekennzeichnet, daß** die Schale (10), ihre Lagerwelle (9) und die Schaufeln (13) ein einziges Formteil bilden, in dem die Permanentmagneten (11) teilweise versenkt sind.

4. Ansaugvorrichtung nach Anspruch 3, **dadurch gekennzeichnet, daß** das Formteil, das die Lagerwelle (9), die Schale (10) und die Schaufeln (13) aufweist, aus spritzgegossenem Kunststoff besteht.

5. Ansaugvorrichtung nach einem der vorhergehenden Ansprüche, **dadurch gekennzeichnet, daß** der Kasten (2, 5) auf dichte Weise in einem Sammler (15) angebracht ist, in den mehrere im Winkel verteilte Auslassöffnungen (4) münden, wobei dieser Sammler (15) über eine Leitung und wenigstens ein Element (17) zum Trennen der festen und gasförmigen Phasen mit einem Staubrückgewinner (16) verbunden ist.

6. Ansaugvorrichtung nach Anspruch 5, **dadurch gekennzeichnet, daß** der Kasten (2, 5) und der Sammler (15) das Gehäuses eines Saugers bilden, dessen Ansaugöffnung (3) die Öffnung des Saugers bildet.

7. Ansaugvorrichtung nach einem der vorhergehenden Ansprüche, **dadurch gekennzeichnet, daß** die Permanentmagneten (11) um den Stator (7) angeordnet und Magnete mit radialer Magnetisierung sind, wobei der Motor weder einen Lastschalter noch einen Umschalter aufweist, der von dem Rotor betätigt wird.

8. Ansaugvorrichtung nach einem der vorhergehenden Ansprüche, **dadurch gekennzeichnet, daß** der Motor ein Motor mit elektronischer Kommutation ist.
